# FASCICULE DE BREVET EUROPEEN

(11) **EP 2 603 989 B1**
(45) Date de publication et mention de la délivrance du brevet: **18.06.2014**
(21) Numéro de dépôt: 10763212.7
(22) Date de dépôt: 09.08.2010
(51) Int. Cl.: H04B 10/25, F41F 3/055, F41G 7/32, F42B 15/04, F42B 19/01

(54) **DISPOSITIF POUR LA TRANSMISSION BIDIRECTIONNELLE DE DONNEES ENTRE UN MOBILE ENERGETIQUEMENT AUTONOME ET UNE STATION DE CONTROLE ET DE COMMANDE**
VORRICHTUNG ZUR BIDIREKTIONALEN DATENÜBERTRAGUNG ZWISCHEN EINER SELBSTVERSORGTEN MOBILEINHEIT UND EINER STEUER- UND KOMMANDOSTATION
APPARATUS FOR BIDIRECTIONAL TRANSMISSION OF DATA BETWEEN A SELF POWERED MOBILE UNIT AND A CONTROL AND COMMAND STATION

(43) Date de publication de la demande: 19.06.2013
(73) Titulaire: Schaer, André, 78150 Le Chesnay (FR)
(72) Inventeur: Schaer, André, 78150 Le Chesnay (FR)
(74) Mandataire: Mazabraud, Xavier
(86) Numéro de dépôt international: PCT/FR2010/051678
(87) Numéro de publication internationale: WO 2012/020176

(56) Documents cités:
- EP-A1- 0 400 831
- FR-A1- 2 616 530
- FR-A1- 2 792 478
- US-A- 5 678 785

## Description

La présente invention concerne un dispositif pour la transmission bidirectionnelle de données entre un mobile énergétiquement autonome et une station de contrôle et de commande.

Elle s'applique, en particulier, à des mobiles possédant à bord l'énergie nécessaire à leur locomotion, quel que soit le milieu, qu'il s'agisse du milieu terrestre, aérien ou sous-marin.

Elle convient notamment, mais non exclusivement, à l'équipement d'engins tels que des « drones » utilisés soit dans le domaine militaire, soit pour certaines applications civiles, telles que la surveillance des structures et des sites d'accès difficile ou présentant un danger pour l'homme.

Ces mobiles qui présentent une grande mobilité sont généralement équipés d'au moins une caméra d'observation et sont télécommandés par un pilote disposant d'une station de contrôle et de commande, laquelle est équipée d'un écran permettant de visionner l'image vidéo transmise par la caméra située à bord du mobile.

Habituellement, ils disposent de capteurs de mesures physiques et/ou physico-chimiques, et de senseurs d'observation infrarouge ou autre ; ils peuvent également être équipés d'actionneurs capables d'effectuer des opérations de manipulations.

Il s'avère que dans la plupart des applications, le milieu dans lequel évoluent ces mobiles est hostile (brouillage radioélectrique, champ ionisant, atmosphère polluée,...). En outre, notamment en ce qui concerne les applications militaires, la discrétion est un atout important voire une nécessité absolue.

En conséquence, les solutions actuelles faisant intervenir des liaisons radioélectriques bidirectionnelles pour assurer les dialogues entre le mobile et la station de contrôle et de commande ne conviennent pas ; par ailleurs, dans le milieu sous-marin, seules les liaisons par ultrasons sont exploitables, mais ne permettent pas des transmissions de données à fort débit nécessaires en particulier pour l'acheminement d'images vidéo en temps réel.

Ce sont les raisons pour lesquelles l'invention propose une solution dans laquelle ces liaisons ne sont plus assurées par voie hertzienne mais par voie optique, par l'intermédiaire d'une fibre optique de très faible diamètre et de grande longueur.

En effet, cette solution permet à la fois de résoudre les problèmes de brouillage et de discrétion précédemment évoqués et d'assurer des transmissions de données, notamment de type numérique à très haut débit, autorisant le transfert, en temps réel, d'une part d'images vidéo et d'informations issues de capteurs du mobile en direction de la station de contrôle et de commande, et d'autre part d'ordres de pilotage du mobile et de commande des actionneurs en direction du mobile.

Néanmoins, elle pose un certain nombre de problèmes relativement délicats à résoudre, à savoir : le problème du stockage et du dévidement de la fibre optique, ces deux opérations devant être effectuées sans que le mobile ne soit gêné dans ses mouvements par la fibre optique, et réciproquement le problème de la protection de la fibre optique vis-à-vis du mobile.

Une solution consiste à installer les moyens de stockage et de contrôle de dévidement de la fibre optique, à bord du mobile (et non au niveau de la station de contrôle et de commande comme cela semblerait le plus logique) de manière à ce que la fibre optique se dévide d'elle-même à l'arrière du mobile, selon l'axe de déplacement de celui-ci. Une telle solution est divulguée dans la demande de brevêt européen EP 0400831 A1.

Par ailleurs, plutôt que d'utiliser en tant que moyen de stockage un tambour rotatif axé perpendiculairement à l'axe de déplacement du mobile nécessitant au voisinage de l'extrémité libre de la fibre optique un joint tournant optique ou éventuellement un tambour tournant multipolaire électrique associé à un circuit de conversion bidirectionnelle optique/électrique, une solution consiste à utiliser un mécanisme de dévidement tournant autour d'un tambour fixe directement associé au circuit de conversion bidirectionnelle optique/électrique.

En effet, il est bien connu que les joints tournants optiques ne possèdent pas de performances stables au cours de leurs utilisations à grande vitesse ; quant aux tambours tournant multipolaires, leur fiabilité est supérieure à celle des joints tournants optiques ; néanmoins, ils ne sont adaptés à la transmission de données numériques à très fort débit.

L'invention propose donc de résoudre ces problèmes en associant au tambour fixe sur lequel la fibre optique est préalablement bobinée en spires jointives, et comprenant un circuit de conversion bidirectionnelle optique/électrique associé à l'extrémité libre de la fibre optique, un mécanisme de dévidement tournant dont la vitesse de rotation est fonction de la vitesse de déplacement du mobile.

Un mode d'exécution de l'invention sera décrit ci-après, à titre d'exemple non limitatif, avec référence aux dessins annexés dans lesquels :
La figure 1 est une représentation schématique d'un drone sous-marin d'observation télécommandé ;
La figure 2 est une représentation schématique d'une liaison bidirectionnelle par fibre optique ;
La figure 3 est une coupe axiale d'une bobine à fibre optique selon une première version ;
La figure 4 est une coupe axiale d'une bobine à fibre optique selon une deuxième version ; et
La figure 5 est une représentation schématique de la motorisation du mécanisme de dévidement.

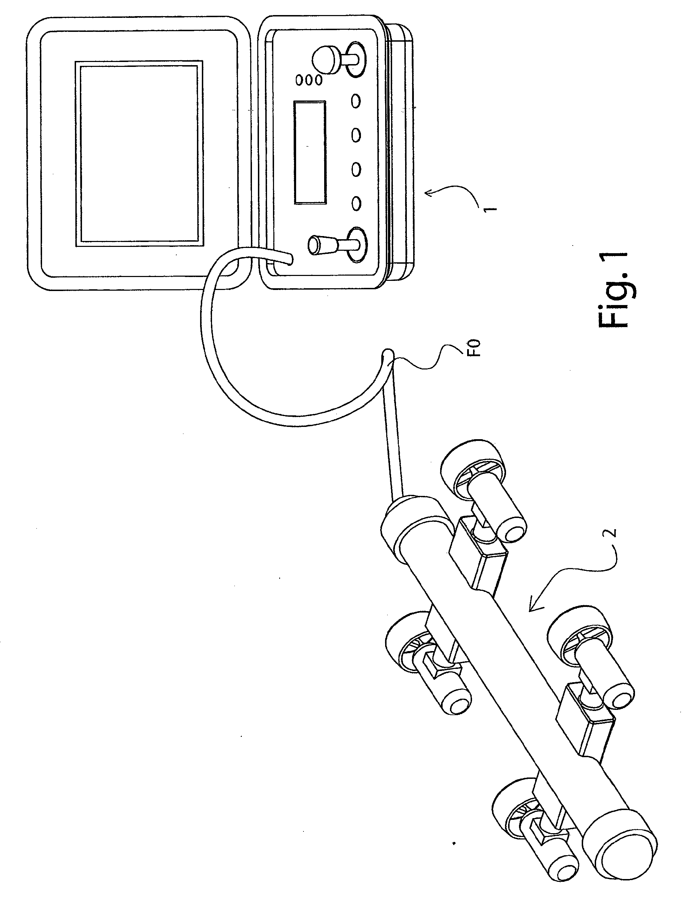

Selon l'exemple représenté sur la figure 1, un mobile énergétiquement autonome est représenté par un drone sous-marin d'observation 2, lequel est télécommandé à partir d'une station de contrôle et de commande 1 ; le support physique permettant la transmission bidirectionnelle des données en temps réel est une fibre optique FO de fiable diamètre et de grande longueur.

La station de contrôle et de commande 1 comprend des "joysticks" permettant de piloter le drone sous-marin d'observation 2 à distance en temps réel ; les données électriques issues des organes de télécommande sont multiplexées, numérisées puis converties en signaux optiques pour être ensuite transmises par la fibre optique FO.

Le drone sous-marin d'observation 2 comprend des actionneurs de pilotage (servomoteurs de vitesse, d'orientation, de manipulation,...), lesquels sont commandés pour la plupart par des signaux analogiques qui résultent des signaux optiques reçus, préalablement convertis en données électriques, lesquelles sont démultiplexées, décodées et converties en signaux analogiques.

Cette double conversion électrique/optique puis optique/électrique dans le sens station de contrôle et de commande 1 vers le drone sous-marin d'observation 2 constitue le premier trajet de la liaison bidirectionnelle.

Le drone sous-marin d'observation 2 comprend, outre ses moyens de locomotion et ses moyens d'alimentation électrique associés, une caméra vidéo d'observation située à l'avant et des capteurs (bathymètre, thermomètre, sonomètre, détecteur d'objet métallique, détecteur infrarouge,...) ; les différentes données issues de la caméra et des capteurs, pour la plupart analogiques, sont numérisées, multiplexées, puis converties en signaux optiques pour être ensuite transmises par la fibre optique FO.

La station de contrôle et de commande 1 comprend en outre un récepteur optique de grande sensibilité qui convertit les signaux optiques en données électriques qui sont à leur tour démultiplexées, décodées et converties en signaux analogiques notamment l'image vidéo transmise à un moniteur.

Cette double conversion électrique/optique puis optique/électrique dans le sens drone sous-marin d'observation 2 vers la station de contrôle et de commande 1 constitue le deuxième trajet de la liaison bidirectionnelle.

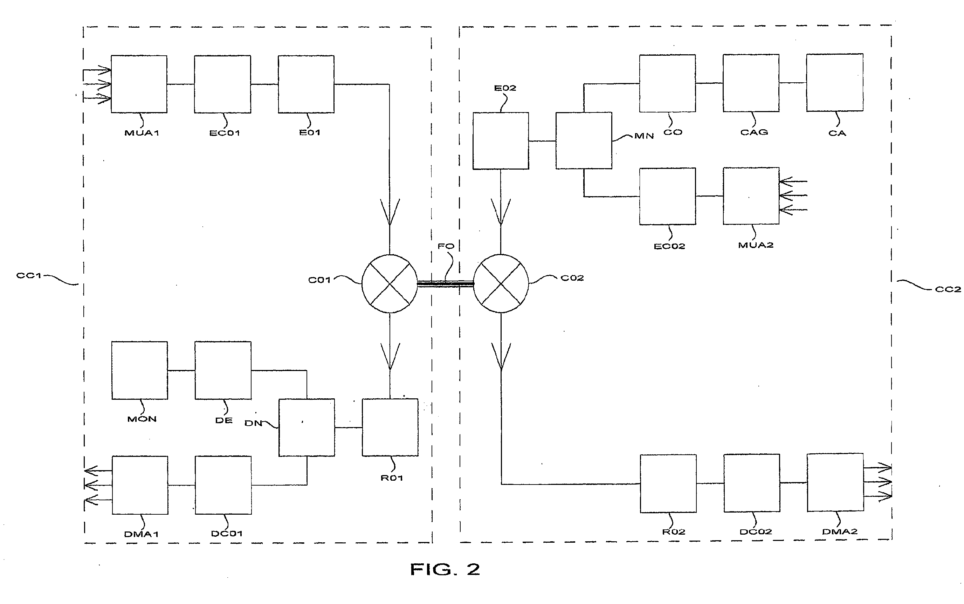

Selon l'exemple représenté sur la figure 2, la station de contrôle et de commande 1 comprend un circuit de conversion électrique/optique et un circuit de conversion optique/électrique associés à un coupleur optique CO1 ; ces trois ensembles constituent le circuit de conversion CC1.

De même, le drone sous-marin d'observation 2 comprend un circuit de conversion électrique/optique et un circuit de conversion optique/électrique associés à un coupleur optique CO2 ; ces trois ensembles constituent le circuit de conversion CC2.

Plus précisément, le circuit de conversion CC1 de la station de contrôle et de commande 1 comprend :
- un multiplexeur analogique MUA1 dont les entrées reçoivent les signaux analogiques issus des commandes de pilotage du drone,
- un encodeur ECO1 (6,75 Mbits/s) qui numérise le signal issu du multiplexeur analogique MUA1,
- un émetteur optique EO1 qui convertit les signaux numériques en signaux optiques, lesquels sont dirigés vers le coupleur optique CO1.

Les éléments MUA1, ECO1 et EO1 constituent la chaîne « émission » de la station de contrôle et de commande.

D'autre part, le circuit de conversion CC1 de la station de contrôle et de commande 1 comprend également:
- un récepteur optique RO1 qui convertit les signaux optiques issus du coupleur optique CO1 en signaux électriques,
- un démultiplexeur numérique DN (189 Mbits/s) qui séparent les données numériques en provenance de la caméra du drone de ceux en provenance des capteurs du drone,
- un décodeur 10bits DE qui convertit les signaux numériques vidéo en signaux analogiques,
- un moniteur vidéo MON,
- un décodeur sous protocole RS 422/485 DCO1 qui convertit les signaux numériques capteurs en signaux analogiques,
- un démultiplexeur analogique DMA1 qui sépare les informations issues des capteurs du drone.

Les éléments RO1, DN, DE, MON, DCO1, DMA1 constituent la chaîne « réception » de la station de contrôle et de commande 1.

Plus précisément, le circuit de conversion CC2 du drone sous-marin d'observation 2 comprend :
- un récepteur optique RO2 qui convertit les signaux optiques issus du coupleur optique CO2 en signaux électriques,
- un décodeur sous protocole RS 422/485 DCO2 qui convertit les signaux numériques des commandes de pilotage en signaux analogiques,
- un démultiplexeur analogique DMA2 qui séparent les informations issues des commandes de pilotage de la station de contrôle et de commande, lesquelles sont dirigées vers les actionneurs du drone.

Les éléments RO2, DCO2, DMA2 constituent la chaîne de « réception » du drone sous-marin d'observation 2.

D'autre part, le circuit de conversion CC2 du drone sous-marin d'observation 2 comprend également:
- une caméra vidéo d'observation CA qui délivre un signal analogique,
- un circuit de contrôle automatique de gain CAG,
- un codeur 10bits CO qui numérise le signal analogique vidéo,
- un multiplexeur analogique MUA2 qui multiplexe les informations analogiques issues des capteurs,
- un encodeur sous protocole RS422/485 ECO2 qui numérise les informations analogiques issues du multiplexeur MUA2,
- un multiplexeur numérique (189 Mbits/s) MN qui multiplexe les informations numériques issues du multiplexeur MUA2 et celles issues du codeur CO,
- un émetteur optique EO2 qui convertit les signaux électriques issus du multiplexeur MN en signaux optiques.

Les éléments CA, CAG, CO, MUA2, ECO2, MN, E02 constituent la chaîne « émission » du drone sous-marin d'observation 2.

La fibre optique FO est couplée à ses deux extrémités aux coupleurs optiques CO1, CO2. Celle-ci peut, par exemple, consister en une fibre optique à saut d'indice (50/125), à propagation monomode ou multimode, de longueur d'onde de 1320 nanomètres, et de diamètre de 900 micromètres ou de 250 micromètres.

Le diamètre de 250 micromètres permet de présenter une résistance à la traction relativement importante (40 Newton) sans altération du signal optique ; sa masse linéique est proche de 72 grammes par kilomètre et les pertes de propagation en version monomode sont de 1 dB par kilomètre.

La puissance de l'émetteur optique est proche de 0 dBm, la dynamique de réception est de 30 dB, le rapport signal à bruit de la vidéo est supérieur à 65 dB. Ainsi, selon ces conditions d'exploitation de la fibre optique, la portée théorique de la transmission bidirectionnelle de données entre le mobile énergétiquement autonome 2 et la station de contrôle et de commande 1 est estimée à 30 kilomètres.

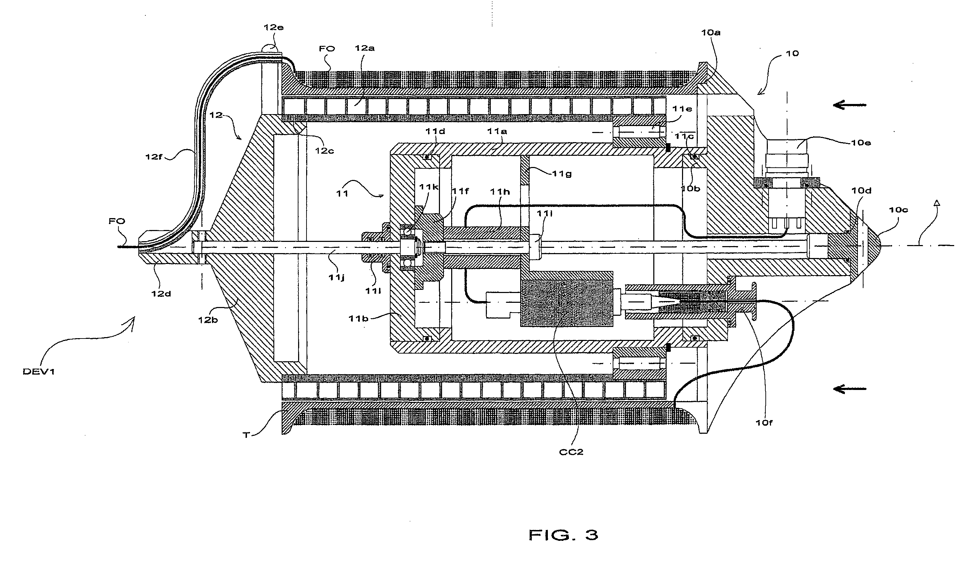

Selon l'exemple représenté sur la figure 3, la fibre optique FO est enroulée en spires jointives sur un tambour cylindrique T dont l'axe principal est Δ.

Un mécanisme de dévidement tournant DEV1, dont l'axe principal est colinéaire avec l'axe Δ, est associé au tambour cylindrique T, et décrit ci-après.

La surface cylindrique interne du tambour T est montée coulissante au voisinage de sa première extrémité sur une première portée cylindrique 10a d'un moyeu tronconique 10 dont l'axe principal est colinéaire avec l'axe Δ du tambour T.

Un dispositif de verrouillage, non représenté, permet de solidariser le tambour T et le moyeu tronconique 10, au voisinage de la première portée cylindrique 10a.

La surface cylindrique interne d'un tambour cylindrique 11, dont l'axe principal est colinéaire avec l'axe Δ du tambour T, est montée coulissante au voisinage de sa première extrémité sur une seconde portée cylindrique 10b de diamètre inférieur à la première portée cylindrique 10a, solidaire du moyeu tronconique 10.

Le tambour cylindrique 11 est constitué d'un manchon 11a et d'un flasque 11b, monté coulissant au voisinage de la surface cylindrique interne du manchon 11a, proche de l'autre extrémité du tambour cylindrique 11.

Un premier joint torique 11c assure l'étanchéité, au voisinage de la portée cylindrique 10b, entre le manchon 11a et le moyeu tronconique 10 ; un second joint torique 11d assure l'étanchéité entre le manchon 11a et le flasque 11b. Autour de la surface externe du manchon 11a, au voisinage de la portée cylindrique 10b, est monté, solidaire du manchon 11a, un roulement à aiguilles 11e.

Un troisième tambour 12, dont l'axe principal est colinéaire avec l'axe Δ, est constitué d'un manchon cylindrique 12a dont la surface interne, au voisinage d'une première extrémité, est montée solidaire de la bague externe du roulement à aiguilles 11e ; l'autre extrémité de la surface interne du manchon 12a est montée solidaire d'une portée cylindrique 12c d'un flasque conique 12b.

Le manchon cylindrique 12a est constitué de deux parois cylindriques coaxiales, séparées par des rampes hélicoïdales dont le rôle sera précisé ultérieurement.

Le flasque 12b comprend au voisinage de sa surface externe conique, un embout cylindrique 12d dont l'axe principal est colinéaire avec l'axe Δ ; il comprend également un index 12e situé radialement au voisinage de la portée cylindrique 12c ; une gaine 12f, en forme de S, relie l'embout cylindrique 12d à l'index 12e.

Une tige cylindrique 10c, dont l'axe principal est colinéaire avec l'axe Δ, traverse le moyeu tronconique 10, prenant appui sur sa face externe, et solidarise le tambour 11 du moyeu tronconique 10 en se vissant dans un flasque 11f solidaire de la surface interne du flasque 11b ; cette tige cylindrique 10c solidarise par ailleurs un support en équerre 11g avec le flasque 11b par l'intermédiaire d'un tube 11h maintenu entre le flasque 11f et un épaulement 11i de la tige cylindrique 10c.

L'étanchéité entre la tige 10c et le moyeu tronconique 10 est assurée par un joint torique 10d.

Un circuit de conversion CC2 est solidaire du support en équerre 11 g ; un connecteur de fibre optique étanche 10f, de type "push-pull", est monté selon un axe parallèle à l'axe Δ, au voisinage de la surface externe du moyeu tronconique 10, colinéaire avec l'axe de l'embase optique du circuit de conversion CC2. Les connexions électriques du circuit de conversion CC2 sont reliées à un connecteur électrique multipolaire étanche 10e, solidaire du moyeu tronconique 10.

Une tige cylindrique 11j, dont l'axe principal est colinéaire avec l'axe Δ, est montée rotative dans le flasque 11b, grâce à un roulement à billes 11k ; l'étanchéité est assurée par un flasque externe 111 muni de joints toriques ; cette tige 11j est solidaire du tambour 12 au voisinage de l'embout cylindrique 12d.

Ainsi, la fibre optique FO, dont l'une de ses extrémités libres est solidaire du connecteur optique 10f, est enroulée, en spires jointives sur le tambour T ; l'autre extrémité libre de la fibre optique FO, située au voisinage de la surface externe du bobinage, traverse la gaine 12f et sort de celle-ci, au voisinage de l'embout cylindrique12d, coaxiale à l'axe Δ.

Lors du déplacement du drone sous-marin d'observation 2, l'eau traverse le moyeu tronconique 10 au voisinage d'orifices situés en face du manchon cylindrique 12a ; les rampes hélicoïdales, situées entre les deux parois cylindriques coaxiales, sont disposées de telle manière qu'elles entraînent en rotation le flasque 12 et, par conséquent, l'index 12e, entraînant la fibre optique FO dans le sens du déroulement de celle-ci autour du tambour T.

Le pas des rampes hélicoïdales étant égal au périmètre de la spire élémentaire de fibre optique FO, la vitesse de rotation de l'index 12e est directement proportionnelle à la vitesse de déplacement dudit drone sous-marin d'observation 2.

Avantageusement, après dévidement total de la fibre optique, le tambour T sera extractible du mécanisme de dévidement DEV1 après extraction du connecteur optique 10f et désolidarisation du moyeu tronconique 10.

Néanmoins, le mécanisme de dévidement tournant DEV1 ne fonctionne que selon un sens de déplacement dudit drone sous-marin d'observation 2, correspondant au sens d'enroulement de la fibre optique ; par ailleurs, le pas des rampes hélicoïdales étant égal au diamètre des spires, le nombre de couches sera limité à quelques unités.

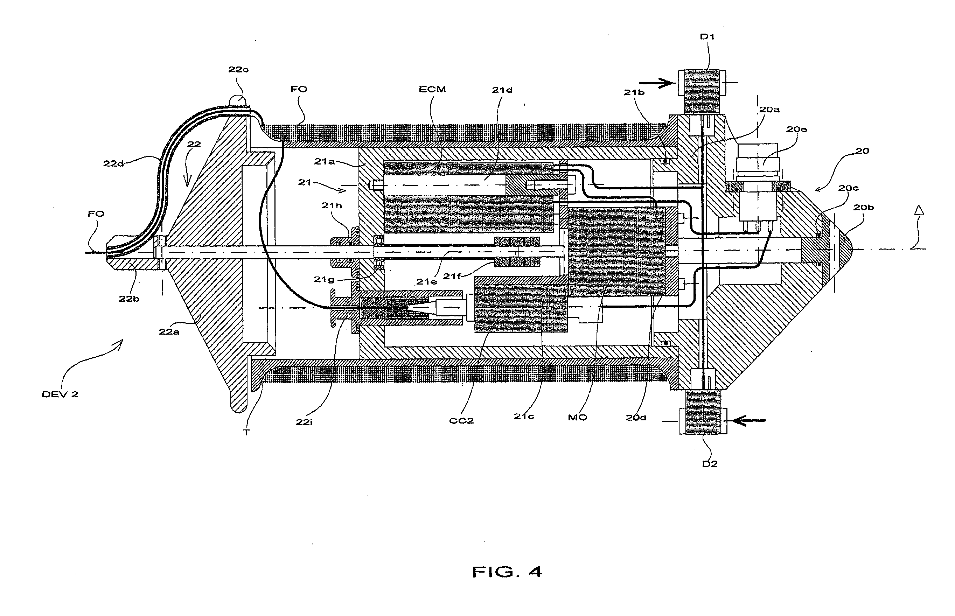

Selon l'exemple représenté sur la figure 4, la fibre optique FO est enroulée en spires jointives sur un tambour cylindrique T dont l'axe principal est Δ.

Un mécanisme de dévidement tournant DEV2, dont l'axe principal est colinéaire avec l'axe Δ, est associé au tambour cylindrique T, et décrit ci-après.

La surface cylindrique interne du tambour T est montée coulissante sur la surface externe cylindrique d'un tambour 21 dont l'axe principal est colinéaire avec l'axe Δ du tambour T.

La surface cylindrique interne du tambour cylindrique 21 est montée coulissante au voisinage de sa première extrémité sur une portée cylindrique 20a d'un moyeu tronconique 20.

Un dispositif de verrouillage, non représenté, permet de solidariser le tambour T et le moyeu tronconique 20, au voisinage de la portée cylindrique 20a. Un joint torique 21b assure l'étanchéité, au voisinage de la portée cylindrique 20a, entre le tambour 21 et le moyeu tronconique 20.

Le tambour cylindrique 21 est constitué d'une paroi 21a située au voisinage de son autre extrémité.

Un flasque conique 22 comprend, au voisinage de sa surface externe conique 22a, un embout cylindrique 22b dont l'axe principal est colinéaire avec l'axe Δ ; il comprend également un index 22c situé radialement ; une gaine 22d, en forme de S, relie l'embout cylindrique 22b à l'index 22c.

Une tige cylindrique 20b, dont l'axe principal est colinéaire avec l'axe Δ, traverse le moyeu tronconique 20, prenant appui sur sa face externe, et solidarise un flasque 20d supportant un moteur pas à pas MO dont l'axe principal est colinéaire avec l' axe Δ.

L'étanchéité entre la tige 20b et le moyeu tronconique 20 est assurée par un joint torique 20c.

Au voisinage de la surface opposée au flasque 20d du moteur MO, une équerre 21c est rendue solidaire du moteur MO ; cette équerre 21c est à son tour rendue solidaire du tambour 21 grâce à une colonnette 21d, dont l'axe principal est parallèle à l'axe Δ ; la colonnette 21 d est vissée dans la paroi 21a du tambour 21.

Ainsi, le tambour 21 est rendu solidaire du moyeu tronconique 20 par le montage successif de la tige 20b, du flasque 20d, du moteur MO, de l'équerre 21c, de la colonnette 21d. L'étanchéité de cet ensemble est assuré par les joints toriques 20c et 21b.

Un circuit de conversion CC2 est solidaire du support en équerre 21c; un connecteur de fibre optique étanche 21i, de type "push-pull", est monté selon un axe parallèle à l'axe Δ, au voisinage de la paroi 21a du tambour 21, colinéaire avec l'axe de l'embase optique du circuit de conversion CC2.

Une tige cylindrique 21e, dont l'axe principal est colinéaire avec l'axe Δ, est montée rotative dans la paroi 21a du tambour 21, grâce à un roulement à billes 21g ; l'étanchéité est assurée par un flasque externe 21h muni de joints toriques ; cette tige 21e est, d'une part, solidaire du flasque conique 22 au voisinage de l'embout cylindrique 22b et, d'autre part, de l'axe du moteur MO, par l'intermédiaire d'un accouplement 21f.

Un circuit électronique ECM de commande du moteur MO est disposé entre la paroi 21a du tambour 21 et l'équerre 21c ; celui-ci est solidaire de la colonnette 21d.

Par ailleurs, le moyeu tronconique 20 comprend quatre capteurs de débit, situés au voisinage des quatre cadrans de la surface externe du moyeu tronconique 20, au voisinage de la portée cylindrique 20a ; seuls deux capteurs sont représentés, à savoir D1, D2.

Les capteurs D1 et D2 mesurent le débit traversant selon un axe parallèle à l'axe Δ, respectivement, D1 lors du déplacement du drone sous-marin d'observation 2 selon l'axe X positif, et D2 lors du déplacement du drone sous-marin d'observation 2 selon l'axe X négatif.

Les capteurs D3 et D4 mesurent le débit traversant selon un axe perpendiculaire à l'axe Δ, respectivement, D3 lors du déplacement du drone sous-marin d'observation 2 selon l'axe Z positif, et D4 lors du déplacement du drone sous-marin d'observation 2 selon l'axe Z négatif.

Les connexions électriques du circuit de conversion CC2 et du circuit électronique ECM sont reliées à un connecteur électrique multipolaire étanche 20e, solidaire du moyeu tronconique 20.

Par ailleurs, des liaisons électriques internes relient le moteur pas à pas MO, les capteurs de débit D1, D2, D3, D4, au circuit électronique ECM.

Ainsi, la fibre optique FO, dont l'une de ses extrémités libres est solidaire du connecteur optique 21i, est enroulée, en spires jointives sur le tambour T ; l'autre extrémité libre de la fibre optique FO, située au voisinage de la surface externe du bobinage, traverse la gaine 22d et sort de celle-ci, au voisinage de l'embout cylindrique 22b, coaxiale à l'axe Δ.

Lors du déplacement du drone sous-marin d'observation 2, l'eau traverse les capteurs de débit D1, D2, D3, D4 ; les informations de débit issues des capteurs sont transmises au circuit électronique ECM, qui à son tour commande le moteur pas à pas MO ; celui-ci entraîne à son tour en rotation le flasque 22 et par conséquent l'index 22c, entraînant la fibre optique FO dans le sens du déroulement de celle-ci autour du tambour T.

Avantageusement, après dévidement total de la fibre optique, le tambour T sera extractible du mécanisme de dévidement DEV2 après extraction du connecteur optique 21i et désolidarisation du moyeu tronconique 20.

Avantageusement, le mécanisme de dévidement tournant DEV2 fonctionne selon les trois axes de déplacement dudit drone sous-marin d'observation 2 ; cette faculté est obtenue grâce au circuit électronique ECM qui prend en compte les informations de débit issues des capteurs D1, D2, D3, D4, ainsi que du diamètre du tambour, du nombre de spires par couche et du nombre de couches.

La configuration du bobinage (diamètre du tambour, du nombre de spires par couche et du nombre de couches) est réalisée grâce à une mémoire associée à un calculateur ; lequel calculateur calcule, en temps réel, la vitesse de rotation du flasque 22 en fonction du nombre de pas du moteur et des informations issues des capteurs D1, D2, D3, D4.

A titre d'exemple numérique, on supposera que le diamètre du tambour est de 100 mm, la longueur de bobinage de celui-ci est de 200 mm, et le diamètre de la fibre optique est de 250 µm ; on supposera que le bobinage comprend quarante couches, soit une épaisseur de bobinage de 10 mm ; dans ces conditions, la longueur de la fibre optique est de 10 kilomètres.

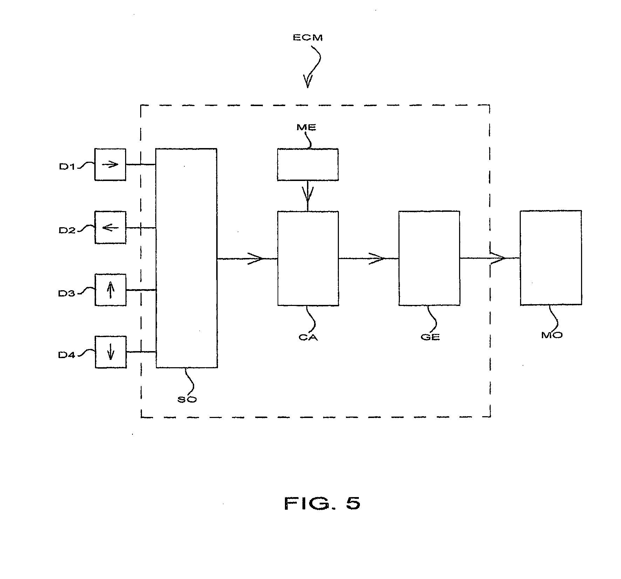

Selon l'exemple représenté sur la figure 5, la motorisation du mécanisme de dévidement DEV2 comprend quatre débitmètres D1, D2, D3, D4, associés à un sommateur SO dont la sortie est dirigée vers un calculateur CA ; les signaux de commande issus du calculateur CA sont appliqués à un générateur quatre phases GE, lequel alimente le moteur pas à pas MO ; par ailleurs, le calculateur CA est associé à une mémoire ME de type EPROM, qui est configuré en fonction du type de bobinage.

Les débitmètres D1, D2, D3, D4 sont des capteurs situés au voisinage de la bobine de fibre optique T et délivrent des impulsions d'amplitude constante, dont la fréquence est proportionnelle au débit d'eau traversant ; chacun de ces débitmètres est orienté de telle sorte qu'ils détectent les mouvements du drone sous-marin d'observation 2 selon les deux directions X, Z ; en effet, le débitmètre D1 mesure le débit d'eau correspondant lors du déplacement avant selon X du drone ; le débitmètre D2 mesure le débit d'eau correspondant lors du déplacement arrière selon -X du drone ; le débitmètre D3 mesure le débit d'eau correspondant lors du déplacement ascendant selon Z du drone ; le débitmètre D4 mesure le débit d'eau correspondant lors du déplacement descendant selon -Z du drone.

Par ailleurs, l'assiette du drone sous-marin d'observation étant supposée maintenue horizontale, lors d'un trajet ascendant ou descendant dans le plan XZ, le calculateur CA prendra en compte les débits d'eau mesurés par les capteurs correspondants et en déterminera la somme géométrique des informations reçues.

De même, lors de la rotation du drone dans le plan XY, le calculateur CA prendra en compte les débits d'eau mesurés par les capteurs correspondants et en déterminera le signe et l'amplitude de la différence des informations reçues. Ainsi, le calculateur CA, en fonction du nombre de spires jointives de fibre optique par couche, du nombre de couches et des informations reçues du sommateur, déterminera en temps réel la vitesse de rotation du mécanisme de dévidement DEV ; le nombre de spires par couche et le nombre de couches sont les paramètres de configuration inscrits dans la mémoire ME.

A titre d'exemple numérique, on supposera que les débitmètres D1, D2, D3, D4 délivrent des impulsions dont la fréquence varie de 0 à 916,66 Hz pour un débit variant de 0 à 2,5 1/mn ; ce qui correspond pour un orifice des susdits débitmètres de 6,35 mm, à un déplacement du drone sous-marin d'observation 2 de 132 cm/s soit 2,56 noeuds ; on supposera que le moteur pas à pas comprend 200 pôles ; à la fréquence de 916,66 Hz, la vitesse de rotation du moteur est de 275 t/mn ; dans ces conditions le diamètre de la spire déroulée de la première couche doit être de 92 mm.

Avantageusement, les fibres optiques bobinées sur un tambour sous légère tension conservent approximativement le rayon de courbure imposé par le tambour ; cet effet de mémoire de forme favorise le dévidement naturel de la fibre ; ce qui autorise une certaine latitude dans la détermination de la vitesse de rotation du mécanisme de dévidement DEV en fonction du déplacement du mobile énergétiquement autonome.

## Revendications

1. Dispositif pour la transmission bidirectionnelle de données entre, d'une part, un mobile énergétiquement autonome (2) et, d'autre part, une station de contrôle et de commande (1),
ladite transmission bidirectionnelle de données s'effectuant grâce à une fibre optique (FO) reliant ladite station de contrôle et de commande (1) audit mobile énergétiquement autonome (2), ladite fibre optique (FO) venant s'enrouler en spires jointives autour d'un tambour fixe (T) centré autour d'un axe (Δ), embarqué sur ledit mobile énergétiquement autonome (2), et en ce que ledit dispositif comprend :
- un circuit de conversion bidirectionnelle optique/électrique (CC2) associé à l'extrémité libre de ladite fibre optique (FO), et
- un mécanisme de dévidement tournant (DEV1), (DEV2), monté coaxial avec l'axe (Δ) dudit tambour (T), dont la vitesse de rotation est fonction de la vitesse de déplacement dudit mobile énergétiquement autonome (2).

2. Dispositif selon la revendication 1,
**caractérisé en ce que** le susdit tambour fixe (T) est axé selon l'axe de déplacement privilégié du mobile énergétiquement autonome (2).

3. Dispositif selon la revendication 1,
**caractérisé en ce que** le susdit mécanisme de dévidement tournant (DEV1), (DEV2) comprend un flasque (12), (22), monté rotatif par rapport au susdit tambour (T), ledit flasque (12), (22) entraîne ladite fibre optique (FO) de la couche supérieure de bobinage en direction du susdit axe (Δ) du tambour (T).

4. Dispositif selon la revendication 3,
**caractérisé en ce que** l'entraînement dudit flasque (12) est obtenu par la circulation d'eau traversant un manchon cylindrique (12a) muni de rampes hélicoïdales.

5. Dispositif selon la revendication 3,
**caractérisé en ce que** l'entraînement dudit flasque (22) est obtenu par la circulation d'eau traversant des capteurs de débit (D1), (D2), (D3), (D4).

6. Dispositif selon la revendication 4,
**caractérisé en ce que** le pas des susdites rampes hélicoïdales du manchon cylindrique (12a) est égal à la circonférence de la spire élémentaire de la fibre optique (FO).

7. Dispositif selon la revendication 5,
**caractérisé en ce que** les informations issues des capteurs de débit (D1), (D2), (D3), (D4) sont transmises à un circuit électronique (ECM) alimentant un moteur pas à pas (MO) entraînant ledit flasque (22).

8. Dispositif selon la revendication 7,
**caractérisé en ce que** ledit circuit électronique comprend une mémoire (ME) contenant les données de bobinage du tambour (T).

9. Dispositif selon l'une des revendications précédentes,
**caractérisé en ce que** le tambour (T) est monté de façon amovible sur le mécanisme de dévidement tournant (DEV).

10. Dispositif selon l'une des revendications précédentes,
**caractérisé en ce que** la liaison optique entre la fibre optique (FO) et le circuit de conversion (CC2) est assurée par un connecteur étanche (10f, (21i).

## Patentansprüche

1. Vorrichtung zur bidirektionalen Datenübertragung zwischen einerseits einer energieautarken mobilen Einrichtung (2) und andererseits einer Steuerungs- und Bedienungsstation (1),
wobei die bidirektionale Datenübertragung dank einer die Steuerungsund Bedienungsstation (1) mit der energieautarken mobilen Einrichtung (2) verbindenden optischen Faser (FO) erfolgt, wobei die optische Faser (FO) in aneinanderliegenden Windungen auf einer feststehenden Trommel (T) aufgewickelt wird, die entlang einer Achse (Δ) zentriert ist und in der energieautarken mobilen Einrichtung (2) eingebaut ist und wobei die Vorrichtung
- einen optisch/elektrischen bidirektionalen Wandlungsschaltkreis (CC2) umfasst, der mit dem freien Ende der optischen Faser (FO) verbunden ist, und
- einen drehbaren Abwickelungsmechanismus (DEV1), (DEV2) umfasst, der koaxial an der Achse (Δ) der Trommel (T) gelagert ist, dessen Drehzahl von der Bewegungsgeschwindigkeit der energieautarken mobilen Einrichtung (2) abhängt.

2. Vorrichtung nach Anspruch 1,
**dadurch gekennzeichnet,**
**dass** die feststehende Trommel (T) entsprechend der bevorzugten Bewegungsachse der energieautarken mobilen Einrichtung (2) ausgerichtet ist.

3. Vorrichtung nach Anspruch 1,
**dadurch gekennzeichnet,**
**dass** der drehbare Abwickelungsmechanismus (DEV1), (DEV2) einen relativ zur Trommel (T) drehbar gelagerten Flansch (12), (22) umfasst, wobei der Flansch (12), (22) die optische Faser (FO) der oberen Schicht der Wicklung in Richtung der Achse (Δ) der Trommel (T) antreibt.

4. Vorrichtung nach Anspruch 3,
**dadurch gekennzeichnet,**
**dass** der Antrieb des Flansches (12) durch die Zirkulation von Wasser durch einen mit spiralförmigen Rampen ausgestatteten zylindrischen Stutzen (12a) erreicht wird.

5. Vorrichtung nach Anspruch 3,
**dadurch gekennzeichnet,**
**dass** der Antrieb des Flansches (22) durch die Zirkulation von Wasser durch Durchflusssensoren (D1), (D2), (D3), (D4) erreicht wird.

6. Vorrichtung nach Anspruch 4,
**dadurch gekennzeichnet, dass** der Schnitt der spiralförmigen Rampen des zylindrischen Stutzens (12a) gleich dem Umfang der Elementarwindung der optischen Faser (FO) ist.

7. Vorrichtung nach Anspruch 5,
**dadurch gekennzeichnet,**
**dass** die von den Durchflusssensoren (D1), (D2), (D3), (D4) stammenden Informationen einer elektronischen Schaltung (ECM) übermittelt werden, die einen den Flansch (22) antreibenden Schrittmotor (MO) versorgt.

8. Vorrichtung nach Anspruch 7,
**dadurch gekennzeichnet,**
**dass** die elektronische Schaltung einen Speicher (ME) umfasst, in dem die Wicklungsdaten der Trommel (T) gespeichert sind.

9. Vorrichtung nach einem der vorhergehenden Ansprüche,
**dadurch gekennzeichnet,**
**dass** die Trommel (T) lösbar auf dem drehbaren Abwickelungsmechanismus (DEV) gelagert ist.

10. Vorrichtung nach einem der vorhergehenden Ansprüche,
**dadurch gekennzeichnet,**
**dass** die optische Verbindung zwischen der optischen Faser (FO) und dem Wandlungsschaltkreis (CC2) durch einen dichten Stecker (10f), (2li) gewährleistet ist.

## Claims

1. Device for bidirectional data transmission between, on one hand, a self-powered moving object (2) and, on the other, a monitoring and control station (1),
said bidirectional data transmission being performed via an optical fibre (FO) connecting said monitoring and control station (1) to said self-powered moving body (2), said optical fibre (FO) being wound in contiguous coils around a fixed drum (T) centred about an axis (Δ), onboard said self-powered moving object (2), and said device comprising:
- a bidirectional optical/electrical conversion circuit (CC2) associated with the free end of said optical fibre (FO), and
- a rotary feed mechanism (DEV1), (DEV2), mounted coaxial with the axis (Δ) of said drum (T), wherein the rotational speed is dependent on the movement speed of said self-powered moving object (2).

2. Device according to claim 1, **characterised in that** said fixed drum (T) is centred along the preferred axis of movement of the self-powered moving object (2).

3. Device according to claim 1, **characterised in that** said rotary feed mechanism (DEV1), (DEV2) comprises a flange (12), (22), rotatably mounted relative to said drum (T), said flange (12), (22) feeds said optical fibre (FO) from the upper winding layer in the direction of said axis (Δ) of the drum (T).

4. Device according to claim 3, **characterised in that** said flange (12) is actuated by circulating water through a cylindrical sleeve (12a) equipped with helical ramps.

5. Device according to claim 3, **characterised in that** said flange (22) is actuated by circulating water through flow sensors (D1), (D2), (D3), (D4).

6. Device according to claim 4, **characterised in that** the pitch of said helical ramps of the cylindrical sleeve (12a) is equal to the circumference of the elementary coil of the optical fibre (FO).

7. Device according to claim 5, **characterised in that** the data from the flow sensors (D1), (D2), (D3), (D4) is transmitted to an electronic circuit (ECM) powering a stepping motor (MO) actuating said flange (22).

8. Device according to claim 7, **characterised in that** said electronic circuit comprises a memory (ME) containing the winding data of the drum (T).

9. Device according to any of the above claims, **characterised in that** the drum (T) is removably mounted on the rotary feed mechanism (DEV).

10. Device according to any of the above claims, **characterised in that** the optical link between the optical fibre FO) and the conversion circuit (CC2) is provided by a sealed connector (10f), (21i).
